# EUROPÄISCHE PATENTSCHRIFT

(11) **EP 2 102 550 B1**
(45) Veröffentlichungstag und Bekanntmachung des Hinweises auf die Patenterteilung: **30.06.2010**
(21) Anmeldenummer: 07856971.2
(22) Anmeldetag: 20.12.2007
(51) Int. Cl.: F23D 1/02, F23N 5/08, F27B 7/34, F27B 7/42, C04B 7/36

(54) **Verfahren zur Regelung des Betriebes eines Drehofenbrenners**
Method for controlling the operation of a rotary furnace burner
Procédé de régulation du fonctionnement d'un brûleur de four rotatif

(30) Priorität: 22.12.2006 DE 102006060869
(43) Veröffentlichungstag der Anmeldung: 23.09.2009
(73) Patentinhaber: KHD Humboldt Wedag GmbH, 51067 Köln (DE)
(72) Erfinder: MERSMANN, Matthias, 4731 Lichtenbusch (BE); JÄGER, Gernot, 51427 Bergisch Gladbach (DE); KNOCH, Alexander, 53797 Lohmar (DE)
(86) Internationale Anmeldenummer: PCT/EP2007/011248
(87) Internationale Veröffentlichungsnummer: WO 2008/077577

(56) Entgegenhaltungen:
- EP-A- 1 518 839
- DE-A1-102004 010 063

## Beschreibung

Die Erfindung betrifft ein Verfahren zur Regelung des Betriebes eines Brenners für einen Drehrohrofen zur Herstellung von Zementklinker, wobei aus der Düsenmündung des Brenners Primärbrennstoffe, Sekundärbrennstoffe und Primärluftströme ausgeblasen werden und Zustandsgrößen der gebildeten Brennerflamme gemessen und in deren Abhängigkeit die Brennerflamme verändert werden.

Bei einer Zementklinkerproduktionslinie wird calciniertes Zementrohmehl in der Sinterzone eines Drehrohrofens zu Zementklinker gebrannt. Zur Beheizung des Drehrohrofens ist in das Ofenauslaufende durch das stationäre Ofenauslaufgehäuse hindurch eine lange Brennerlanze eingeführt, an deren Ausmündung die in die Lanze eingeführten Brennstoffe unter Bildung einer Brennerflamme verbrennen. Bei der Klinkermineralbildung im Drehrohrofen kommt es auf die richtige Temperatur, Länge und sonstige Gestaltung der Brennerflamme an. Die Entwicklung geht dahin, durch hochgradige Calcination des Zementrohmehls außerhalb des Drehrohrofens den Drehrohrofen selbst möglichst kurz zu bauen, so dass in Reaktion hierauf die Brennerflamme in der Regel möglichst kurz und heiß sein soll. Als Brennstoffe werden statt flüssige und gasförmige Brennstoffe immer häufiger Festbrennstoffe, insbesondere Kohlenstaub, aber in letzter Zeit auch pneumatisch transportierbare stückige Abfallbrennstoffe wie z. B. Abfallkunststoffgranulate etc. als sogenannte Sekundärbrennstoffe eingesetzt.

Bekannte Drehofenbrenner sind oft als sog. Dreikanalbrenner ausgebildet (z. B. DE-10 2004 010 063 A1), mit wenigstens drei zueinander konzentrischen Kanälen, d. h. durch den mittleren Brennerkanal strömt als Brennstoff der pneumatisch transportierte Kohlenstaub, der durch eine Ringspaltdüse austritt, wobei der ausströmende Kohlenstaub von einem radial inneren als auch von einem radial äußeren Primärluftstrom als Brennluft umgeben ist. Die radial äußere Luft, auch Jetluft genannt, wird mittels einer Vielzahl im ringförmigen Jetluftkanal angeordneter einzelner Düsen in viele einzelne Hochgeschwindigkeits-Primärluftstrahlen unterteilt, die in ihre Umgebung ein Unterdruckgebiet erzeugen, d. h. die vielen Hochgeschwindigkeits-Primärluftstrahlen dienen als Treibstrahlen nach dem Injektorprinzip, durch welches die große Masse der den Drehofenbrenner umgebenden, praktisch ruhenden heißen Sekundärluft von z. B. etwa 1000° C nach innen in Richtung im Kern der Brennerflamme eingesaugt wird, wo eine intensive Durchmischung der heißen Sekundärluft mit dem durch die Ringspaltdüse austretenden Kohlenstaub stattfindet, der schnell und vollständig unter Ausbildung einer kurzen heißen Flamme verbrennen soll.

Beim bekannten Drehofenbrenner weist der radial innerhalb des Kohlenstaubkanals liegende Primärluftkanal an seiner Ausmündung einen Drallerzeuger auf, der während des Brennerbetriebes verstellbar ist, wobei durch Leitschaufelverstellung der Ausströmwinkel der Drallluft sowie die Flammenform des Drehofenbrenners beeinflussbar sind. Ein automatisiertes Regelungskonzept ist daraus nicht bekannt.

Aus der EP 1 518 839 A1 ist ein Verfahren zum Betrieb einer Zementklinkerproduktionsanlage bekannt, mit Sensoren z. B. Kamera zur Überwachung der Charakteristiken der Flamme des Drehofenbrenners und Einsatz dieser Messgrößen zu einer automatisierten Regelung mit Einsatz eines Rechners. Als Stellgrößen sind dabei lediglich Regeleingriffe auf die jeweils zugeführten Massen- bzw. Mengenströme des Zementrohmehls mit Zuschlägen, der Primär- und Sekundärbrennstoffe sowie der Brennluft bekannt.

In der Praxis wurden z. B. bei geforderter größerer Brennerflamme die Volumenströme und Drücke der dem Drehofenbrenner zugeleiteten Primärluft erhöht. Dies hat jedoch unerwünschte Effekte zur Folge wie z. B. erhöhter Verschleiß der Feuerfest-Auskleidung, erhöhte Verdampfungsraten störender Schadstoffe, und vor allem Erhöhung des spezifischen Wärmeenergieverbrauchs des Gesamtprozesses. Denn bei einem optimalen Betrieb eines Drehofenbrenners geht es darum, mit möglichst wenig kalter Primärluft (z. B. ca. 5 Vol.-%) möglichst viel heiße Sekundärluft (z. B. ca. 95 Vol.-%) in den Kern der Brennerflamme zwecks schneller und vollständiger Brennstoffverbrennung einzusaugen. Der Anteil an kalter Primärluft soll auch dann möglichst nicht erhöht werden, wenn im Drehofenbrenner ein erhöhter Anteil an stückigen preisgünstigen Alternativbrennstoffen bzw. Sekundärbrennstoffen wie z B. Abfallkunststoffgranulate etc. verbrannt werden soll.

Der Erfindung liegt die Aufgabe zugrunde, für den Betrieb des Lanzenbrenners eines Drehrohrofens zur Herstellung von Zementlinker aus calciniertem Zementrohmehl ein automatisiertes Regelungsverfahren bereitzustellen, das für alle eingesetzten Brennstoffe auf die Gestalt der Brennerflamme optimiert ist, ohne unbedingt Regeleingriffe auf die zugeführten Mengen- bzw. Massenströme der Brennstoffe und/oder der Brennluft und/oder des Zementrohmehls vornehmen zu müssen.

Diese Aufgabe wird gemäß der Erfindung mit einem Verfahren mit den Merkmalen des Anspruchs 1 gelöst. Vorteilhafte Weiterbildungen der Erfindungen sind in den Unteransprüchen angegeben.

Während bei den bekannten Regelungen eines Drehofenbrenners mit Überwachung der Brennerflamme bei Regelungsbedarf jedenfalls die dem Brenner zugeführten Volumen- bzw. Massenströme der Primärluft und/oder der Brennstoffe verändert worden sind, was unerwünscht ist, nachdem diese Brennstoff- und Brennluftströme einmal in einem optimalen Verhältnis zueinander eingestellt und auf den gesamten Zementklinkerbrennprozess abgestimmt worden sind, werden beim erfindungsgemäßen Regelungsverfahren diese Volumen- bzw. Massenströme zunächst nicht angetastet, sondern es erfolgen in Abhängigkeit der gemessenen Charakteristiken der Brennerflamme Regeleingriffe auf Stellgrößen des Brenners selbst, wie sie im Merkmal b) des Anspruchs 1 angegeben sind. Dies setzt voraus, dass beim erfindungsgemäßen Regelungsverfahren der Drehofenbrenner die Möglichkeit bietet, mehrere Stellgrößen während des Betriebes einzeln oder gleichzeitig verändern zu können, nämlich den räumlichen Ausströmwinkel sowie den Drallimpuls eines verdrallten Primärluftstroms, und/oder den Divergenzwinkel der aus einzelnen um den Brennerumfang verteilten Düsen austretenden Primärluft-Jetluft-Strahlen, und/oder die Austrittsgeschwindigkeit und/oder die Drallkomponente eines durch den Brenner geblasenen Stroms von stückigen Sekundärbrennstoffen.

Die Messgrößen aus der Flammenüberwachung werden einem intelligenten Regler zugeleitet, der mit einer Logik die o. g. Regeleingriffe auf den Drehofenbrenner vornimmt, in der Weise, dass je nach Brennstoff die Brennerflamme die gewünschte Gestalt annimmt und beibehält, wobei besonders auch die partikelförmigen und stückigen Bestandteile der Festbrennstoffe sich vollständig in den Flammkegel einmischen und in der Flamme selbst ausbrennen. Durch die automatisierte Brennerregelung in Richtung einer optimierten auf die jeweilig eingesetzten Brennstoffe und auf den jeweiligen Zementklinkerbrennprozess zugeschnittenen Brennerflamme erübrigt sich jegliche manuelle Brennereinstellung während des Brennerbetriebs.

Beim erfindungsgemäßen Verfahren zur Regelung des Betriebes eines Drehofenbrenners können zu den Messgrößen der Eigenschaften der Brennerflamme einschließlich deren Temperatur weitere Messgrößen als zusätzliche Messgrößen in den Regelkreis eingebracht werden, wie z. B. die Analyse des Drehofenabgases insbesondere CO- und/oder NOx-Gehalt, und/oder die Temperatur des Mantels des Drehrohrofens, und/oder die Temperatur der Rekuperationsluft aus dem Klinkerkühler, die als Sekundärluft in den Drehofen einströmt, und/oder die Stromaufnahme des Drehofen-Antriebsmotors, und/oder Kennzahlen über das Ausbrandverhalten der Sekundärbrennstoffe.

Sofern die unterschiedlichen Regeleingriffe auf den Drehofenbrenner gemäß Merkmal b) des Anspruchs 1 an ihre Grenzen gestoßen sein sollten, besteht die Möglichkeit, zusätzlich zu diesen Regeleingriffen noch einen Regeleingriff auf die Volumenströme der Primärluft und/oder auf die Primärluftdrücke und/oder auf die Massenströme der eingesetzten Primär- und Sekundärbrennstoffe vorzunehmen.

Die Erfindung und deren weitere Merkmale und Vorteile werden anhand des in den Figuren schematisch dargestellten Ausführungsbeispieles näher erläutert.

Es zeigt:
- Fig. 1:: schematisch einen Axialschnitt durch das Zentrum der Mündung eines Drehofenbrenners, der wenigstens drei unterschiedliche Stellgrößen bietet und der daher zur Durchführung des erfindungsgemäßen Regelungsverfah- rens grundsätzlich geeignet ist, und
- Fig. 2:: vergrößert herausgezeichnet und perspektivisch mehr im Detail den Axialschnitt durch die Brennermündung, teil- weise in Stirnansicht, zur Erläuterung des automatisierten Betriebes des Brenners eines Drehrohrofens zur Herstel- lung von Zementklinker.

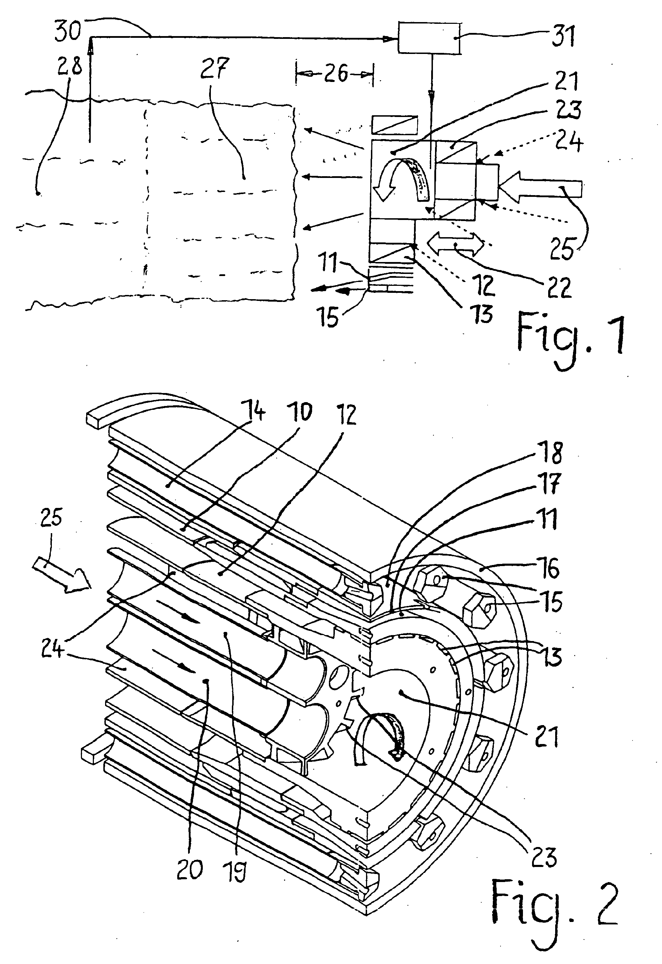

Zunächst wird anhand der Fig. 2 der für das erfindungsgemäße automatisierte Regelungsverfahren geeignete Drehofenbrenner beschrieben. Dieser ist ein Vierkanalbrenner mit einem ringförmig angeordneten Kanal 10 zum pneumatischen Transport eines feinkörnigen Festbrennstoffs wie z. B. Kohlenstaub als Primärbrennstoff, der durch eine Ringspaltdüse 11 mit geringem nach außen divergierenden Winkel ausströmt. Der Kohlenstaubkanal 10 ist konzentrisch sowohl von einem radial innen als auch von einem radial außen gelegenen Brennluftkanal umgeben, wobei diese Brennluftströme für den Brenner die Primärluft bilden, deren Anteil an der gesamten Brennluft möglichst gering sein soll. Der konzentrisch innerhalb des Kohlenstaubkanals 10 angeordnete Primärluftkanal 12 ist an seiner Ausmündung mit einem verstellbaren Drallerzeuger 13 z. B. mit verstellbaren Leitschaufeln, Drallschlitzen etc. ausgestattet, so dass dieser radial innen gelegene Primärluftkanal auch Drallluftkanal genannt wird. Die radial äußere Primärluft, auch Jetluft genannt, wird über achsparallel um die Brennerachse verteilt angeordnete Jetluftrohre 14 zugeführt und sie tritt mit hoher Geschwindigkeit in Form von Düsenstrahlen aus einzelnen um den Umfang der Brennermündung verteilt angeordneten Jetluftdüsen 15 aus, z. B. zwölf Stück. Die Hochgeschwindigkeits-Jetluftstrahlen, die in der Lage sind, möglichst viel der den Drehofenbrenner im Drehrohrofen umgebenden heißen Sekundärluft von z. B. 1000° C in den Kern der Brennerflamme zwecks schneller und vollständiger Brennstoffverbrennung einzusaugen, sollen den Brennstoffkegel bzw. die Brennerflamme an einer optimalen Stelle zwecks Erzielung großer Flammenturbulenzen treffen.

Im Ringraum zwischen dem außen liegenden Brennertragrohr 16 und dem konzentrisch dazu angeordneten Kohlenstaubrohr 17 wird Kühlluft durch den Brenner geblasen, die an der Brennermündung im Bereich zwischen den benachbarten Jetluftdüsen 15 ausströmt, wo dann die an der Brennerlanze erhitzte Kühlluft noch einen Anteil der Primärluft bilden kann. Der ringförmige Kühlluftkanal ist mit der Bezugsziffer 18 bezeichnet. Das Brennertragrohr 16 ist jedenfalls im vorderen Brennerlanzenbereich durch eine aufgebrachte in Fig. 2 nicht dargestellte Feuerfestmasse geschützt.

In das Zentralrohr des Brenners, in welches bei einem konventionellen Brenner ein zentraler Zündbrenner und/oder ein Ölbrenner einsetzbar ist, sind gemäß Ausführungsbeispiel der Fig. 2 z. B. zwei Rohre 19, 20 zum pneumatischen Transport und Ausblasen von stückigen Alternativbrennstoffen bzw. Sekundärbrennstoffen wie z. B. Abfallkunststoffgranulate etc. eingeführt. Vor der Ausmündung der Rohre 19, 20 zur Ausblasung der Sekundärbrennstoffe ist im Brenner eine zur Brennermündung hin offene Expansionskammer 21 mit im Vergleich zu den Rohrquerschnitten erweitertem Querschnitt angeordnet. Das heißt bei diesem Drehofenbrenner lässt man die über die Rohre 19, 20 eingeblasenen stückigen Sekundärbrennstoffe 25 zunächst in die Expansionskammer 21 austreten, aus welcher dann die dort mit verlängerter Verweilzeit voroxidierten stückigen Sekundärbrennstoffe mit deutlich reduzierter Geschwindigkeit an der Brennermündung in den Flammkegel der Brennerflamme eintreten, wobei die Gefahr des Vorbeifliegens stückiger Sekundärbrennstoffpartikel an der Flamme minimiert ist. Damit lässt sich der Mengenanteil von einsetzbaren preisgünstigen stückigen Sekundärbrennstoffen als Energieträger erheblich steigern und ein Teil des vergleichsweise teuren Primärbrennstoffs einsparen.

Durch eine in Fig. 1 mit dem Doppelpfeil 22 angezeigte Axialverschiebung der Sekundärbrennstoff-Rohre 19, 20 kann die axiale Länge und das Volumen der Expansionskammer 21 während des Brennerbetriebes variiert werden. Auf diese Weise kann Einfluss genommen werden auf die Voroxidation Austrittsgeschwindigkeit und Flugweite der an der Brennermündung ausgeblasenen stückigen Sekundärbrennstoffpartikel sowie auch auf die Gestaltung der Brennerflamme.

Das Einmischen der ausgeblasenen stückigen Sekundärbrennstoffe in die Brennerflamme sowie deren Gestaltung können noch dadurch beeinflusst werden, dass an der Ausmündung der Sekundärbrennstoffrohre 19, 20 in die Expansionskammer 21 ein eigener verstellbarer Drallerzeuger 23 angeordnet ist zur Verdrallung der Sekundärbrennstoffe bereits in der Expansionskammer 21. Gemäß Ausführungsbeispiel der Fig. 2 besteht dieser Drallerzeuger 23 aus einem an die Ausmündungen der Sekundärbrennstoffrohre 19, 20 angesetzten und von den Sekundärbrennstoffen durchströmten Bauteil, das über den Umfang verteilte Drallschlitze aufweist, die von zusätzlicher durch den Brenner geblasener Primärluft durchströmt sind, die über den Ringkanal 24 in den Brenner eingeführt wird und die ihren Drehimpuls in der Expansionskammer 21 auf die ausgeblasenen stückigen Sekundärbrennstoffe überträgt. Auch diese Maßnahme trägt dazu bei, dass beim Drehofenbrenner die vergleichsweise große Menge an einzusetzenden stückigen Sekundärbrennstoffen nicht in unerwünschter Weise an der Brennerflamme vorbeifliegt.

In Fig. 1 ist der Regelkreis der automatisierten Regelung des Betriebes des Drehofenbrenners schematisch dargestellt. Über die Signalleitung 30 werden im optischen oder infraroten Spektrum gemessene Zustandsgrößen der Brennerflamme 28 insbesondere Flammenlänge und Flammendicke einem Regler 31 zugeleitet, der zwecks Einstellung und Aufrechterhaltung einer optimierten Flammengestaltung Regeleingriffe auf eine oder mehrere der wenigstens drei verschiedenen Stellgrößen des Brenners während des Brennerbetriebes vornehmen kann: auf den verstellbaren Drallerzeuger 13 für den radial inneren Primärluftstrom zur Veränderung des räumlichen Ausströmwinkels und des Drallimpulses dieser Primärluft, und/oder auf die Verdrehung der Jetluftdüsen 15 und damit Änderung des Divergenzwinkels dieser Primärluft, und/oder auf die Verschiebbarkeit 22 der Sekundärbrennstoff-Rohre 19, 20 sowie auf deren Drallerzeuger 23 zur Veränderung der Flugweite und/oder Drallkomponente der ausgeblasenen stückigen Sekundärbrennstoffe 25, die in Fig. 1 wie bei Fig. 2 mit dem großen Pfeil symbolisiert sind.

Ferner ist in Fig. 1 schematisch dargestellt, dass nicht nur die Flammengestalt, sondern auch der gewünschte Abstand 26 des Beginns der Flammenwurzel 27 zur Brennermündung z. B. in einem Bereich von etwa 300 bis etwa 800 mm mit Hilfe der einstellbaren axialen Länge der Expansionskammer 21 sowie des Drehimpulses der ausgeblasenen Sekundärbrennstoffe 25 und ggf. in Abhängigkeit von weiteren Parametern auch während des Brennerbetriebes einstellbar sind. Dieser gewünschte Abstand 26 wird als Optimum gefunden zwischen einer materialschonenden großen Distanz der Flammwurzel 27 zur Brennermündung und einer verbrennungstechnisch gewünschten kurzen Distanz zwischen Flammwurzel und Brennermündung.

Das erfindungsgemäße Regelungsverfahren ist nicht auf die Benutzung eines Brenners gemäß Ausführungsbeispiele Fig. 1 und 2 beschränkt. So kann als Primärbrennstoff statt Kohlenstaub auch Öl eingesetzt werden, wenn Kohlenstaub nicht zur Verfügung stehen sollte. Der Drallluftkanal kann statt radial innerhalb auch radial außerhalb des Primärbrennstoffkanals angeordnet sein, und die radial innere Primärluft könnte ggf. auch entfallen.

## Patentansprüche

1. Verfahren zur Regelung des Betriebes eines Brenners für einen Drehrohrofen, wobei aus der Düsenmündung des Brenners Primärbrennstoffe, Sekundärbrennstoffe und Primärluftströme ausgeblasen werden und Zustandsgrößen der gebildeten Brennerflamme (28) gemessen und in deren Abhängigkeit die Brennerflamme verändert werden,
**gekennzeichnet durch** folgende Merkmale:
a) als Messgrößen werden die Charakteristiken der Brennerflamme (28) wenigstens mit den Daten Länge und/oder Dicke der Brennerflamme verwendet;
b) als Stellgrößen des Brenners werden der räumliche Ausströmwinkel sowie der Drallimpuls des verdrallten Primärluftstroms (12, 13), und/oder der Divergenzwinkel der aus einzelnen um den Brennerumfang verteilten Düsen (15) austretenden Primärluft-Jetluft-Strahlen, und/oder die Austrittsgeschwindigkeit und/oder Drallkomponente eines durch den Brenner geblasenen Stroms von stückigen Sekundärbrennstoffen (25) verwendet;
c) die Regeleingriffe b) erfolgen über einen Regler (31) automatisiert zum Zwecke einer optimierten Gestaltung der Brennerflamme (28).

2. Verfahren nach Anspruch 1,
**dadurch gekennzeichnet, dass** zu den Messgrößen der Eigenschaften der Brennerflamme (28) weitere Messgrößen als zusätzliche Messgrößen in den Regelkreis eingebracht werden, wie die Analyse des Drehofenabgases insbesondere CO- und/oder NOx-Gehalt, und/oder die Temperatur des Mantels des Drehrohrofens, und/oder die Temperatur der Rekuperationsluft aus dem Klinkerkühler, die als Sekundärbrennluft in den Drehrohrofen einströmt, und/oder die Stromaufnahme des Drehofen-Antriebsmotors, und/oder Kennzahlen über das Ausbrandverhalten der Sekundärbrennstoffe.

3. Verfahren nach Anspruch 1,
**dadurch gekennzeichnet, dass** zusätzlich zu den Regeleingriffen auf die Stellgrößen des Brenners gemäß Anspruch 1 Merkmal b) noch ein Regeleingriff auf die Volumenströme der Primärluft und/oder auf die Primärluftdrücke und/oder auf die Massenströme der eingesetzten Primär- und Sekundärbrennstoffe vorgenommen wird.

## Claims

1. Method for regulating the operation of a burner for a rotary tubular furnace, primary fuels, secondary fuels and primary-airstreams being blown out of the nozzle mouth of the burner, and state variables of the burner flame (28) formed being measured, and the burner flame being varied as a function of these,
**characterized by** the following features:
a) the characteristics of the burner flame (28), at least with the length and/or thickness of the burner flame as data, are used as measurement variables;
b) the spatial outflow angle and the swirl momentum of the swirled primary-airstream (12, 13) and/or the angle of divergence of the primary-air/jet-air jets emerging from individual nozzles (15) distributed around the burner circumference and/or the velocity of emergence and/or swirl component of a stream of fragmentary secondary fuels (25) which is blown through the burner are used as manipulated variables of the burner;
c) the regulating actions b) are carried out in an automated manner via a controller (31) for the purpose of an optimized configuration of the burner flame (28).

2. Method according to Claim 1, **characterized in that**, in addition to the measurement variables of the properties of the burner flame (28), further measurement variables are introduced as additional measurement variables into the control loop, such as the analysis of the rotary-furnace exhaust gas, in particular the CO and/or NOx content, and/or the temperature of the casing of the rotary tubular furnace and/or the temperature of the recuperation air from the clinker cooler, which flows as secondary combustion air into the rotary tubular furnace, and/or the current consumption of the rotary-furnace drive motor and/or characteristic numbers relating to the burn-out behaviour of the secondary fuels.

3. Method according to Claim 1, **characterized in that**, in addition to the regulating actions on the manipulated variables of the burner according to Claim 1, feature b), a regulating action is also carried out on the volume flows of the primary air and/or on the primary-air pressures and/or on the mass flows of the primary and secondary fuels used.

## Revendications

1. Procédé de régulation du fonctionnement d'un brûleur de four rotatif, dans lequel on expulse hors de l'embouchure des buses du brûleur des combustibles primaires, des combustibles secondaires et des courants d'air primaire et on mesure des grandeurs d'état de la flamme de brûleur formée (28) et on modifie la flamme du brûleur en fonction de celles-ci, **caractérisé par** les caractéristiques suivantes:
a) on utilise comme grandeurs de mesure les caractéristiques de la flamme de brûleur (28) au moins avec les données de longueur et d'épaisseur de la flamme du brûleur;
b) on utilise comme grandeurs de réglage du brûleur l'angle de sortie spatial ainsi que l'impulsion rotative du courant d'air primaire tournoyant (12, 13) et/ou l'angle de divergence des jets d'air primaire sortant de quelques buses (15) réparties autour de la périphérie du brûleur, et/ou la vitesse de sortie et/ou la composante de rotation d'un courant de combustibles secondaires en morceaux (25) insufflé à travers le brûleur;
c) on effectue les opérations de régulation de manière automatisée au moyen d'un régulateur (31) afin d'optimiser la configuration de la flamme du brûleur (28).

2. Procédé selon la revendication 1, **caractérisé en ce qu'**en plus des grandeurs de mesure des propriétés de la flamme du brûleur (28), on introduit dans le circuit de régulation d'autres grandeurs de mesure comme grandeurs de mesure supplémentaires, comme l'analyse des gaz d'échappement du four rotatif, en particulier les teneurs en CO et/ou en NOx, et/ou la température de l'enveloppe du four rotatif, et/ou la température de l'air de récupération à partir du refroidisseur de clinker, qui pénètre dans le four rotatif comme air de combustion secondaire, et/ou la consommation de courant du moteur d'entraînement du four rotatif, et/ou des paramètres relatifs au comportement de combustion des combustibles secondaires.

3. Procédé selon la revendication 1, **caractérisé en ce que**, en plus des opérations de régulation sur les grandeurs de réglage du brûleur selon la revendication 1, caractéristique b), on effectue encore une opération de régulation sur les courants volumiques de l'air primaire et/ou sur les pressions d'air primaire et/ou sur les courants massiques des combustibles primaires et secondaires utilisés.
